# EUROPEAN PATENT APPLICATION

(11) **EP 1 571 437 A1**
(43) Date of publication of application: **07.09.2005**
(21) Application number: 05002550.1
(22) Date of filing: 07.02.2005
(51) Int. Cl.: G01N 1/34, B01L 3/02, A61M 3/00

(54) **Apparatus for isolating nucleic acid, component thereof, and method for manufacturing apparatus for isolating nucleic acid**

(30) Priority: 24.02.2004 JP 2004048533
(71) Applicant: Hitachi High-Technologies Corporation, Tokyo 105-8717 (JP)
(72) Inventor: Shoji, Yoshiyuki Hitachi High-Technologies Corp., Hitachinaka-shi Ibaraki 312-8504 (JP); Sakurai, Toshinari Hitachi High-Technologies Corp, Hitachinaka-shi Ibaraki 312-8504 (JP); Shibasaki, Takehiko Hitachi High-Technologies Co., Hitachinaka-shi Ibaraki 312-8504 (JP); Yamashita, Yoshihiro Hitachi High-Technologies Co., Hitachinaka-shi Ibaraki 312-8504 (JP); Kumazaki, Nobutaka Hitachi High-Technologies Co., Hitachinaka-shi Ibaraki 312-8504 (JP); Umetsu, Hiroshi Hitachi High-Tech Manuf.& Serv. Co, Hitachinaka-shi Ibaraki 312-8504 (JP)
(74) Representative: Strehl Schübel-Hopf & Partner

(57) **Abstract**

It is an object of the present invention to further stabilize the efficiency of isolating nucleic acid concerning an apparatus for isolating nucleic acid. The present invention relates to an apparatus for isolating nucleic acid, the apparatus being provided with a meshed solid substance for binding nucleic acid. By employing the meshed solid substance for binding nucleic acid, fluid resistance can be reduced upon allowing a sample that includes nucleic acid to pass the solid substance for binding nucleic acid, while securing solid-phase volume that is sufficient for binding a large amount of nucleic acid. Consequently, even when the sample is allowed to pass the solid substance for binding nucleic acid at a high aspiration/dispense speed, force added to the solid substance for binding nucleic acid is small and the solid substance for binding nucleic acid is almost undistorted. The average pore size of the mesh that has an influence on the efficiency of binding nucleic acid by the meshed solid substance for binding nucleic acid is also almost unchanged. Therefore, the optimum state of the efficiency of isolating nucleic acid can be maintained.

## Description

### BACKGROUND OF THE INVENTION

The present invention relates to technology for eluting and extracting nucleic acid included in a biological sample, for example, from coexisting materials.

In gene-related researches and technologies, the purification of nucleic acid is necessary by which nucleic acid included in a biological sample, such as blood, is extracted by elution from coexisting materials. Until today, various nucleic acid purification methods and apparatuses used for the methods have been proposed.

JP Patent Publication (Kohyo) No. 2003-501644 A discloses a syringe type apparatus for processing samples. In this apparatus, a syringe filled with solid-phase bead groups capable of binding biological molecules, such as DNA, is used. Nucleic acid is captured by the solid-phase bead groups by allowing a sample that includes nucleic acid to pass through the solid-phase bead groups.

### SUMMARY OF THE INVENTION

The size of clearance of solid-phase bead groups has an influence on the efficiency of binding nucleic acid by the solid-phase beads, namely the probability of contact between the solid-phase beads and nucleic acid. However, in the aforementioned syringe type apparatus for processing samples, the clearance of the solid-phase bead groups varies by the passage of a sample when the sample that includes nucleic acid is allowed to pass the solid-phase bead groups disposed in a movable manner inside the syringe. Thus, the clearance of the solid-phase bead groups cannot be maintained in a state that is optimum for binding nucleic acid, so that the efficiency of isolating nucleic acid is not stable.

It is an object of the present invention to further stabilize the efficiency of isolating nucleic acid concerning an apparatus for isolating nucleic acid.

The present invention relates to an apparatus for isolating nucleic acid, the apparatus being provided with a meshed solid substance for binding nucleic acid. By employing the meshed solid substance for binding nucleic acid, fluid resistance can be reduced upon allowing a sample that includes nucleic acid to pass the solid substance for binding nucleic acid, while securing solid-phase volume that is sufficient for binding a large amount of nucleic acid. Consequently, even when the sample is allowed to pass the solid substance for binding nucleic acid at a high aspiration/dispense speed, force added to the solid substance for binding nucleic acid is small and the solid substance for binding nucleic acid is almost undistorted. The average pore size of the mesh that has an influence on the efficiency of binding nucleic acid by the meshed solid substance for binding nucleic acid is also almost unchanged. Therefore, the optimum state of the efficiency of isolating nucleic acid can be maintained.

According to the present invention, the efficiency of isolating nucleic acid concerning an apparatus for isolating nucleic acid can be improved.

The above and further objects and novel features of the invention will be more fully appear from the following detailed description when the same is read in connection with the accompanying drawings. It is to be expressly understood, however, that the drawing is for purpose of illustration only and is not intended as a definition of the limits of the invention.

### BRIEF DESCRIPTION OF THE DRAWINGS

Fig. 1 shows a cross-sectional view of an example of the syringe according to the present invention.
Fig. 2 shows an assembly diagram of an example of the syringe structure according to the present invention.
Fig. 3 shows structural diagrams of examples of a nucleic acid binding unit and a holder according to the present invention.
Fig. 4 shows a flow chart of an example of an assembly method for the syringe according to the present invention.
Fig. 5 shows a flow chart of an example of a method for eluting and extracting nucleic acid using the syringe according to the present invention.
Fig. 6 shows a diagram of an example of a method for extracting a sample or reagent in a container using the syringe according to the present invention.
Fig. 7 shows a diagram of another example of the holder according to the present invention.
Fig. 8 shows an assembly diagram of another example of the nucleic acid binding unit according to the present invention.
Fig. 9 shows a diagram of another example of a holding member according to the present invention.
Fig. 10 shows a cross-sectional view of another example of the nucleic acid binding unit according to the present invention.
Fig. 11 shows a diagram of yet another example of the nucleic acid binding unit according to the present invention.
Fig. 12 shows a cross-sectional view of another example of the syringe.
Fig. 13 shows a cross-sectional view of the holder structure of the nucleic acid binding unit used for the syringe in Fig. 12.
Fig. 14 shows a flow chart of a method for eluting and extracting nucleic acid using the syringe in Fig. 12.
Fig. 15 shows a diagram of yet another example of the syringe.

### DESCRIPTION OF THE PREFERRED EMBODIMENTS

### (Embodiment)

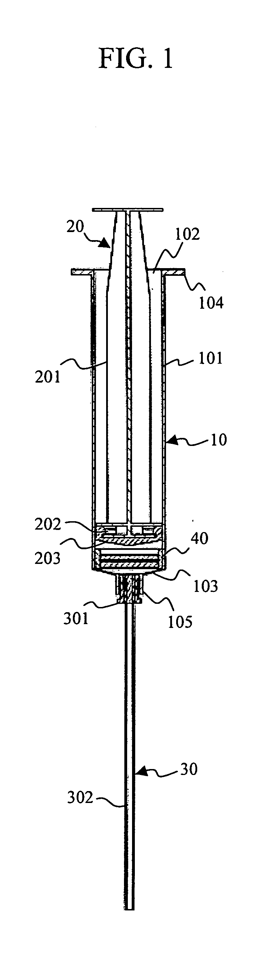

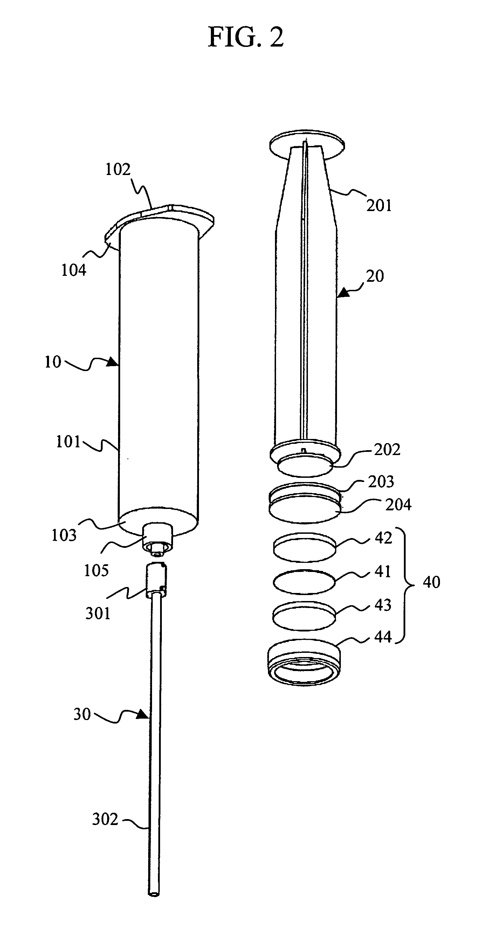

A syringe is described as an apparatus for isolating nucleic acid according to the present embodiment with reference to Figs. 1 and 2. The syringe of the present example comprises a syringe body 10, a plunger 20, a nozzle 30, and a nucleic acid binding unit 40. The syringe of the present example is usually used in an upright state with the nozzle 30 being disposed in the lower side as shown in Fig. 1. In the present specification, the syringe is described in the following on the assumption that it is disposed in an upright state as shown in Fig. 1. Thus, a nozzle side is referred to as the lower side and a plunger side is referred to as an upper side.

The syringe body 10 has a cylindrically-shaped cylindrical portion 101, an open portion 102 at the upper end, a bottom portion 103 at the lower end, a brim-shaped holding position 104 disposed on the periphery of the open portion 102, and a connecting portion 105 for connecting the nozzle disposed on the bottom portion 103. The bottom portion 103 may be formed in a conical manner.

The plunger 20 has a plunger body 201 and a seal piece 203. The seal piece 203 is formed as a separate member of the plunger body 201, and is attached to an attachment portion 202 at the lower end of the plunger body 201. The seal piece 203 has a conical protrusion 204 at its lower end. In the present invention, the plunger body 201 and the seal piece 203 are separate members. However, they may be formed by a single component so long as the sealability of the member is maintained.

The nozzle 30 has a connecting portion 301 at the upper end and a cylindrical portion 302 extending downward thereof. The lower end of the cylindrical portion 302 may be thin like a knife so as to promote sharp aspiration/dispense of liquid. The connecting portion 301 of the nozzle and the connecting portion 105 of the syringe body are connected by press fitting, screws, adhesion by adhesive, welding, and the like.

The syringe body 10 and the plunger body 201 are formed by resin that has high chemical resistance and is readily subjected to a forming process. Preferably, the syringe body and the plunger body are formed by transparent materials, such as polypropylene, for example. Scales are formed or written on the outer surface of the cylindrical portion 101 of the syringe body 10. The seal piece 203 is formed by elastic materials, such as rubber. The nozzle 30 may be formed by resin that has high chemical resistance and is readily subjected to a forming process, or the nozzle may be formed by metal, such as stainless.

The dimensions of the syringe body, plunger, and nozzle are different in accordance with the volume of sample to be handled. In the example, a syringe for 30 ml is described. In the syringe for 30 ml, the inside diameter of the nozzle is 2 mm.

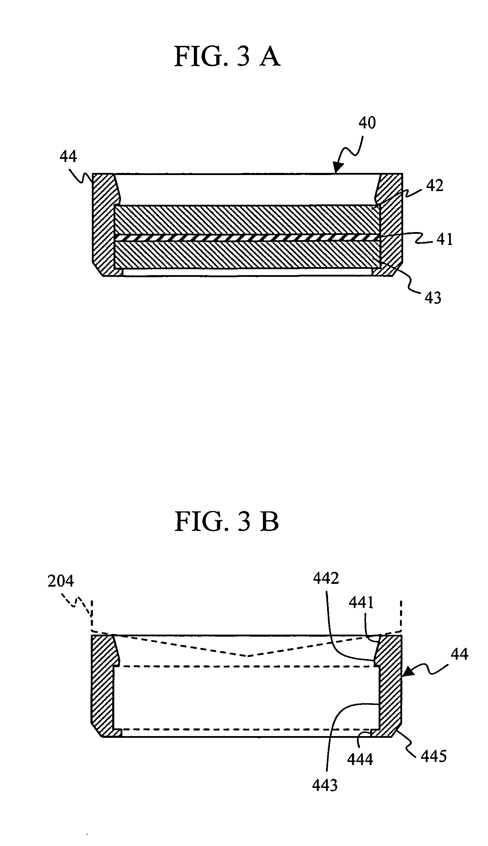

The structure of the nucleic acid binding unit 40 is described with reference to Figs. 2 and 3. As shown in Figs. 2 and 3A, the nucleic acid binding unit 40 in the present example includes a disk-shaped nucleic acid binding member 41 that includes silica, two disk-shaped holding members 42 and 43 disposed on the upper side and lower side of the nucleic acid binding member 41, and a cylindrical holder 44.

As shown in Fig. 3B, the inner surface of the holder 44 has a tapered portion 441 at the upper end, a ring-shaped protrusion 442, a cylindrical portion 443, and a ring-shaped protrusion 444 at the lower end. The tapered portion 441 has a conical surface such that the inside diameter is gradually reduced in the lower direction. The boundary from the lower end of the tapered portion 441 to the cylindrical portion 443 is constricted such that the inside diameter is increased. The protrusion 442 is formed by the constriction. The inside diameter of a first protrusion 442 is slightly smaller than the outside diameters of the holding members 42 and 43. Thus, when inserting the holding members 42 and 43 into the holder 44, the holding members 42 and 43 are press-fitted from the protrusion 442 of the holder 44. At least one of the holder 44 and the holding member 42 is elastically deformed upon press fitting. The press fitting operation can be readily made by the tapered portion 441 of the holder 44.

The inside diameter of a second protrusion 444 is smaller than the outside diameters of the holding members 42 and 43. Thus, the nucleic acid binding member 41 and the holding members 42 and 43 are held in a sandwich manner between the two protrusions 442 and 444. A taper or a chamfer 445 is formed at the lower end of the outer surface of the holder 44.

The nucleic acid binding member 41 comprises a multitude of fine fiber mesh that includes silica. In other words, the nucleic acid binding member 41 is composed of a multitude of fine fibers disposed in random directions along a substantial plane. The fibers that constitute the nucleic acid binding member may be any materials, such as glass wool, sintered quartz, and the like, as long as silica is included.

The nucleic acid binding member may be solidified by a binder. In other words, the fibers that constitute the nucleic acid binding member are adhered to one another by the binder, thereby maintaining suitable strength and preventing the fibers from crumbling. Consequently, an operation of incorporating the nucleic acid binding member into the holder can be readily conducted. Also, since a sample that includes whole blood generally has high viscosity, a large force is added to the nucleic acid binding member when the sample is passed through the nucleic acid binding member. However, by solidifying the nucleic acid binding member using the binder, the shape of the nucleic acid binding member is not changed significantly when the high-viscosity sample is passed through the nucleic acid binding member, and the average pore size of the nucleic acid binding member can be maintained in a state that is optimum for binding nucleic acid. As a matter of course, the solidification by the binder can be omitted if such strength is not necessary. The nucleic acid binding member may be manufactured by punching out a sheet comprising fibers that includes silica using a punch-like cutter, or by press cutting the sheet.

The shape of the nucleic acid binding member is represented by an aspect ratio defined as a ratio of thickness to diameter. For example, if the nucleic acid binding member is disk shaped, the aspect ratio is the thickness of the disk/the diameter of the disk. If the nucleic acid binding member is platy, the aspect ratio is the thickness of the plate/the length of the diagonal. Preferably, the aspect ratio of the nucleic acid binding member in the present example is not more than 1. Preferably, the thickness of the nucleic acid binding member is not more than 0.5 mm. In the embodiment, the thickness of the nucleic acid binding member is 0.4 mm.

Silica binds to nucleic acid in the presence of chaotropic material. The binding efficiency of nucleic acid to silica can be improved by increasing the contact ratio of nucleic acid to the surface of silica. In the inside of the nucleic acid binding member, a multitude of paths are formed in order to pass a sample (sample solution) that includes nucleic acid. The larger the total value of the inner surface area of such paths is, the higher the contact ratio of nucleic acid to the surface of silica becomes. The total value of the inner surface area of the paths can be increased by adding the number of the paths and reducing the average pore size of the paths.

However, by reducing the average pore size of the paths, fluid resistance when the sample is passed through the nucleic acid binding member is increased. If the average pore size of the paths is too small, clogging is caused by biological materials, such as blood corpuscles, nucleic acid, and the like included in the sample. Preferably, the maximum pore size of the nucleic acid binding member is 60 µm. The average pore size of the nucleic acid binding member is 0.2 to 30 µm, preferably 10 to 20 µm.

The maximum pore size of the nucleic acid binding member is measured by the bubble point method (JIS K 3832). According to the bubble point method, the nucleic acid binding member is immersed in a solution so as to wet the nucleic acid binding member completely, and then the minimum pressure when the nucleic acid binding member starts to release bubbles is measured. The maximum pore size is obtained on the basis of the minimum pressure. The average pore size can be obtained from the maximum pore size. For example, it may be assumed that the average pore size is a half of the maximum pore size.

The nucleic acid binding member 41 has an outside diameter slightly larger than the inside diameter of the holder 44. Inside the holder 44, the nucleic acid binding member 41 is disposed along the inner wall of the holder 44 such that the circumferential outer edge of the nucleic acid binding member 41 is brought into contact with the inner wall. The nucleic acid binding member 41 is held inside the holder 44 in a state where the nucleic acid binding member 41 is sandwiched between the holding members 42 and 43. The circumferential outer edge of the nucleic acid binding member 41 is compressed by being sandwiched between the holding members 42 and 43, and adhered to the inner wall of the holder 44. Therefore, sealability between the nucleic acid binding member 41 and the holder 44 can be increased.

The holding members 42 and 43 have fluid resistance at least smaller than that of the nucleic acid binding member. In other words, the holding members are constructed such that a sample is flown at least more readily than in the nucleic acid binding member. The average pore size of the holding members 42 and 43 is 100 µm, for example. The holding members may be constructed by porous materials that have no function of binding nucleic acid. For example, holding members may be formed by heat forming a multiple of resin beads. Examples of resin include polypropylene.

According to the present example, load to the nucleic acid binding member due to the passage of a sample is sufficiently small, since the nucleic acid binding member 41 is formed in a mesh manner. The nucleic acid binding member 41 is sandwiched by the holding members 42 and 43, so that there is almost no clearance between the nucleic acid binding member 41 and the holding members 42 and 43. The nucleic acid binding member remains almost unmoved when the sample is passed through the nucleic acid binding member by moving the plunger 20. In other words, if the plunger 20 is reciprocated, the nucleic acid binding member is not moved synchronously. Thus, the nucleic acid binding member is not broken even if the nucleic acid binding member comprises fragile materials, such as glass wool, sintered quartz, and the like, and when a high-viscosity sample, such as whole blood, is passed through the nucleic acid binding member.

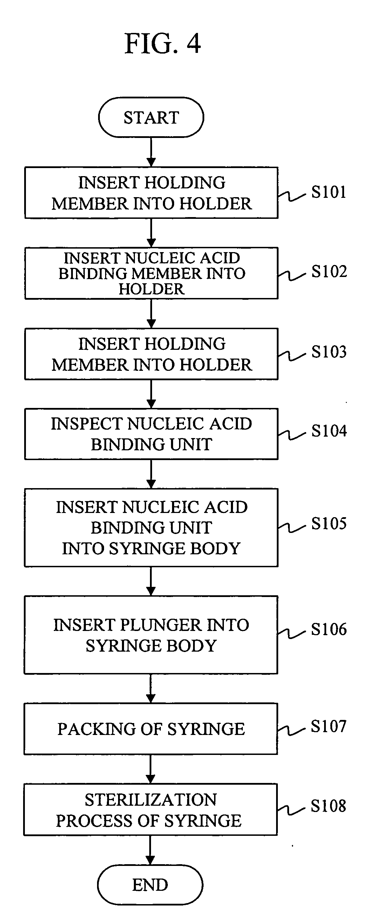

The assembling method of the syringe in the present example is described with reference to Fig. 4. In step S101, the holding member 43 on the lower side is inserted into the holder 44. The holding member 43 is press-fitted into the holder 44, since the outside diameter of the holding member 43 is slightly larger than the inside diameter of the protrusion 442 on the inner surface of the holder 44. In this case, at least one of the holding member 43 and the holder 44 is elastically deformed.

In step S102, the nucleic acid binding member 41 is inserted into the holder 44. The nucleic acid binding member 41 is disposed on the holding member 43 on the lower side. In step S103, the holding member 42 on the upper side is inserted into the holder 44. The holding member 42 is press-fitted into the holder 44, since the outside diameter of the holding member 42 is slightly larger than the inside diameter of the protrusion 442 on the inner surface of the holder 44. Consequently, the nucleic acid binding member 41 is held in the holder 44 in a state where the nucleic acid binding member 41 is sandwiched between the two holding members 42 and 43, thereby forming the nucleic acid binding unit 40.

In step S104, appearance observation and liquid penetration inspection of the nucleic acid binding unit 40 are conducted. In the appearance observation, visual observation is conducted to confirm whether the nucleic acid binding member 41 is adhered to the inner surface of the holder 44, and whether there is no clearance between the nucleic acid binding member and the holding members 42 and 43. In the liquid penetration inspection, the sealability of the nucleic acid binding member 41 is inspected.

In step S105, the nucleic acid binding unit 40 is inserted into the syringe body 10. The nucleic acid binding unit 40 is held in the vicinity of the open portion 102 at the upper end of the syringe body 10. In step S106, the plunger 20 is inserted into the syringe body 10. The seal piece 203 of the plunger 20 is brought into contact with the nucleic acid binding unit 40. As shown by the broken line in Fig. 3B, the conical surface of the protrusion 204 of the seal piece 203 is brought into line contact with the inner edge of the open portion at the upper end of the holder 44. When the plunger 20 is pushed into the syringe body 10, force from the plunger 20 is uniformly applied to the nucleic acid binding unit 40 via the line contact. When the plunger 20 is further pushed into the syringe body 10, the nucleic acid binding unit 40 is brought into contact with the bottom portion 103 of the syringe body 10, thereby finishing the preparation of the syringe. In step S107, the syringe is packed and in step S108, the syringe is subjected to a sterilization process, and then shipped.

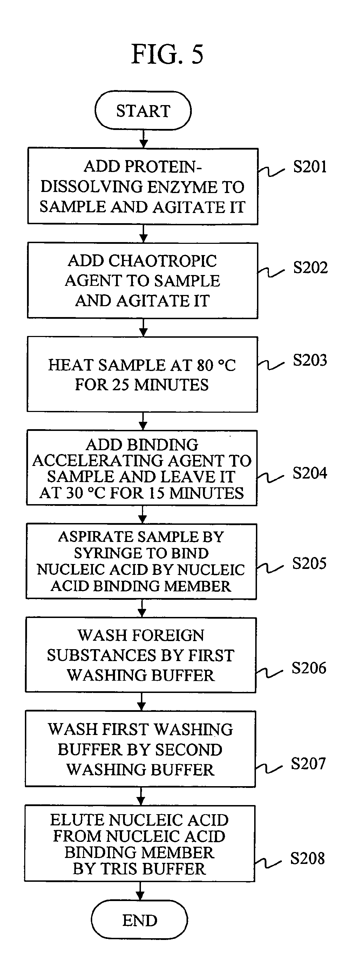

A method for extracting nucleic acid from a sample (sample solution) using the syringe of the present example is described with reference to Fig. 5. The sample is whole blood, for example. In step S201, a first reagent and the sample are injected into a container, and then agitated. The first reagent is dissolving enzyme so as to break protein, and the principal component is proteinase K solution. In step S202, a second reagent is added to the sample, and then agitated. The second reagent is chaotropic agent so as to denature protein, and is a solution that includes guanidine hydrochloride, for example. In step S203, the sample provided with these reagents is heated. The heating is conducted at 80 °C and for 25 minutes, for example. Heating time can be reduced by continuously agitating during the heating. In step S204, a third reagent is added to the sample, and the sample is allowed to stand for about 15 minutes for cooling down to about 30 °C. Although a cooling method may be natural cooling, it may be forced cooling so as to reduce a processing time. The third reagent is binding accelerating agent, and is a solution that includes diethylene glycol dimethyl ether.

In step S205, nucleic acid is captured using the syringe of the present example. At first, the plunger 20 is inserted into the syringe body 10, such that the seal piece 203 is brought into contact with the nucleic acid binding unit 40. Thus, the plunger 20 is pulled up by a predetermined volume from the syringe body 10, in order to detach the seal piece 203 from the nucleic acid binding unit 40. Consequently, a space is formed between the seal piece 203 and the nucleic acid binding unit 40. Air held in the space is used in the end in order to dispense the sample from the syringe body 10 completely. Then, the tip of the nozzle 30 is inserted into the sample prepared in step S204. Preferably, only the lower end of the nozzle 30 is inserted into the sample so as to prevent the adhesion of a large quantity of the sample to the outer surface of the nozzle 30. By lifting the plunger 20, the sample is introduced into the inside of the syringe body 10. The sample is passed through the nucleic acid binding unit 40 and the binding of nucleic acid is initiated. The plunger 20 is stopped when it is lifted up to a predetermined location. When the stop of sample movement is confirmed, then the plunger 20 is pushed into the syringe body 10. By pushing into the plunger 20, the sample is passed through the nucleic acid binding unit 40 to the opposite direction, the binding of nucleic acid is continued. Such a reciprocating motion of the plunger 20 is repeated for several times. In the end, the plunger 20 is sufficiently pushed into the syringe body 10 and the sample is completely dispensed. As mention above, since air is held in advance inside the syringe body 10, the sample is completely dispensed by dispensing the air. After a lapse of a predetermined time, the plunger 20 is pulled up by a predetermined volume from the syringe body 10 so as to form a space between the seal piece 203 and the nucleic acid binding unit 40 for the following step.

It must be noted that air should not be entered into the syringe body 10 from the nozzle 30 along with the sample during the reciprocating motion of the plunger 20. If air is mixed, the passability of the sample to the nucleic acid binding unit 40 is reduced, so that the efficiency of nucleic acid binding is reduced. In the present example, a predetermined volume of air is introduced into the inside of the syringe body 10 before the sample is aspirated, as mentioned above. By sufficiently reducing the volume of air, the sample can be made to better track the motion of the plunger 20 as the sample is aspirated. In other words, the tracking ability of the liquid level can be improved. Especially, operating efficiency can be improved even when the viscosity of the sample is high, since the following ability of liquid level can be secured.

In step S206, a first washing of the syringe is conducted. The tip of the nozzle 30 is inserted into a fourth reagent and the plunger 20 is lifted to introduce the fourth reagent into the syringe body 10. The fourth reagent is a first washing buffer and is a solution that includes sterilized water. When the plunger 20 is lifted up to a predetermined location, then the plunger 20 is pushed into the syringe body 10, thereby reciprocating the first washing buffer in the nucleic acid binding unit 40. Foreign substances that adhered to the syringe body 10 and the nucleic acid binding unit 40 are washed out by the first washing buffer, so that only captured nucleic acid is left in the nucleic acid binding member 41. By sufficiently pushing the plunger 20 into the syringe body 10, the first washing buffer is completely dispensed. This operation is repeated using new first washing buffer. Although, the reciprocating motion of the plunger 20 may be repeated for several times using the same first washing buffer, washing effect is decreased, since used first washing buffer includes foreign substances. Thus, new first washing buffer is preferably used. When the first washing is ended, the plunger 20 is pulled up by a predetermined volume from the syringe body 10 so as to form a space between the seal piece 203 and the nucleic acid binding unit 40 for the following step.

In step S207, a second washing of the syringe is conducted. The second washing is conducted in order to wash out the first washing buffer left in the syringe. The tip of the nozzle 30 is inserted into a fifth reagent and the plunger 20 is lifted to introduce the fifth reagent into the syringe body 10. The fifth reagent is a second washing buffer and is a solution that includes ethanol. When the plunger 20 is lifted up to a predetermined location, then the plunger 20 is pushed into the syringe body 10, thereby washing out the first washing buffer adhered to the syringe body 10 and the nucleic acid binding unit 40. This operation is repeated using new second washing buffer. When the second washing buffer is completely dispensed, in the end, the plunger 20 is reciprocated at high speed in the air, thereby introducing air into the syringe body 10 at high speed and dispensing it at high speed. By repeating this, the second washing buffer is completely removed from the syringe. If the second washing buffer is left, it affects the following operation. When the second washing is ended, the plunger 20 is pulled up by a predetermined volume from the syringe body 10 so as to form a space between the seal piece 203 and the nucleic acid binding unit 40 for the following step.

In step S208, nucleic acid is eluted from the nucleic acid binding member 41. The tip of the nozzle 30 is inserted into a sixth reagent. The sixth reagent is tris buffer in order to elute nucleic acid. The plunger 20 is reciprocated, thereby reciprocating the tris buffer through the nucleic acid binding unit 40. Nucleic acid is eluted from the nucleic acid binding member 41 by the tris buffer. Although the reciprocating motion of the plunger 20 may be repeated using the same sixth reagent, the reciprocating motion of the plunger 20 may be repeated using new sixth reagent. When the elution of nucleic acid is conducted with replaced sixth reagent, a plurality of gained sixth reagent is mixed in a single container. This allows obtaining nucleic acid in a short time.

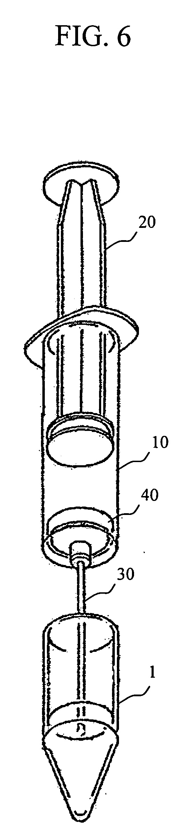

Fig. 6 shows a method for using the syringe according to the present example. As shown in the figure, reagent or a sample is separately injected into a container 1 in advance. In this manner, containers in which reagent or a sample is stored are prepared as many as necessary. The tip of the nozzle 30 is inserted into a liquid in the container and the liquid is introduced into the syringe body 10 by lifting the plunger 20.

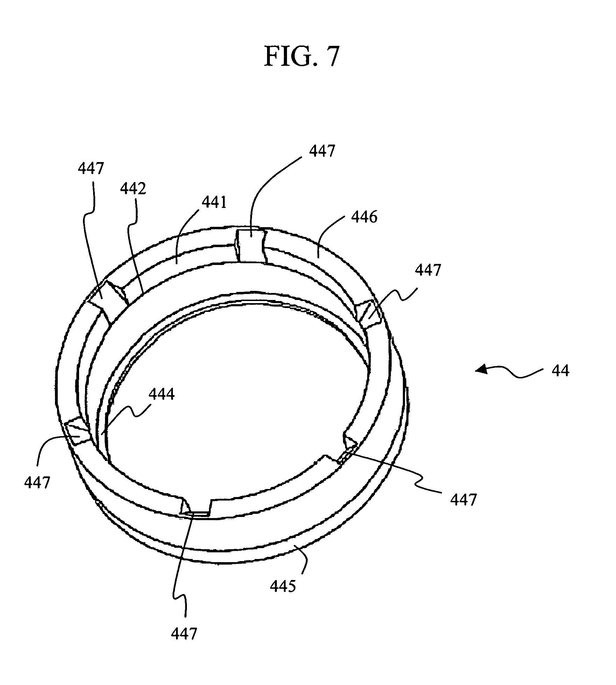

Fig. 7 shows another example of the holder 44. A plurality of furrows 447 are formed on a top surface 446 of the holder 44 of the present example. The bottom faces of the furrows 447 are tilted from the outer edge to the inner edge direction of the top surface 446 of the holder 44. As shown in Fig. 1, the syringe is usually used uprightly. Thus, the top surface 446 of the holder 44 is horizontal, where a sample or reagent remains. The residual sample or reagent is mixed into a sample or reagent introduced into the syringe body in the following step. Consequently, the action of newly introduced sample or agent is changed, so that expected effects cannot be obtained. In the present example, the residual sample or reagent on the top surface 446 of the holder 44 flows down via the furrows 447. Especially, a small amount of residue flows down along the edge portions of the furrows. Thus, the sample or reagent is prevented from remaining on the top surface 446 of the holder 44.

Although the furrows are disposed in the present embodiment, the thickness of the upper end of the holder 44 may be extremely thin instead. As a result, the sample or reagent is prevented from remaining on the top surface of the holder 44. However, in this case, a plurality of protrusions are preferably disposed at the upper end of the inner surface of the holder 44. The protrusions constitute a contact surface with an insertion jig upon inserting the nucleic acid binding unit 40 into the syringe. Thus, the nucleic acid binding unit 40 is inserted straightforwardly along an axis line direction without tilting upon inserting the nucleic acid binding unit 40 into the syringe.

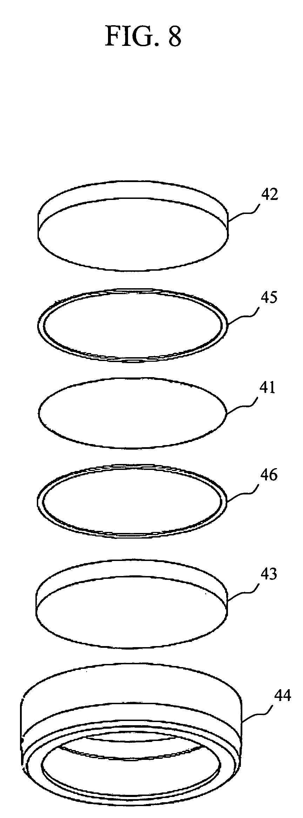

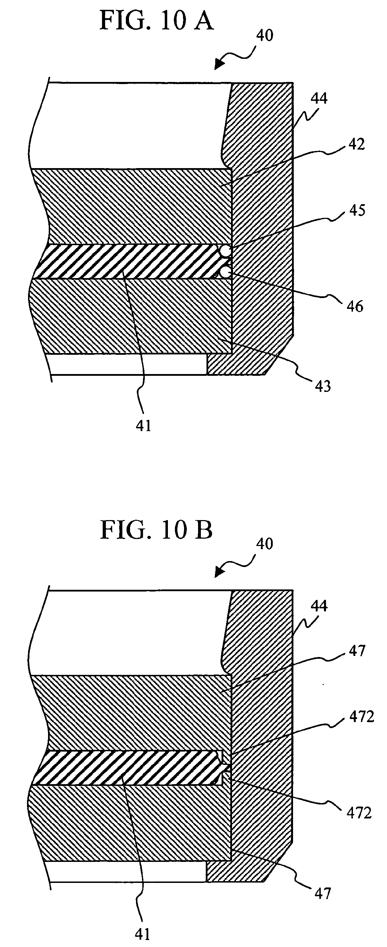

Another example of the nucleic acid binding unit 40 is described with reference to Fig. 8. The nucleic acid binding unit in the present example comprises a disk-shaped nucleic acid binding member 41 that includes silica, two disk-shaped holding members 42 and 43 disposed on the upper side and lower side of the nucleic acid binding member 41, and rings 45 and 46 disposed between the nucleic acid binding member 41 and the holding member 42 on the upper side, and between the nucleic acid binding member 41 and the holding member 43 on the lower side, and the cylindrical holder 44. The nucleic acid binding unit 40 according to the present example differs from the nucleic acid binding unit 40 shown in Figs. 1 and 2 in that the two rings 45 and 46 are disposed additively. The rings 45 and 46 are formed by an elastic body and the outside diameter is substantially the same as the outside diameter of the nucleic acid binding member 41. Fig. 10A shows a cross-section of the main portions of the nucleic acid binding unit 40 in the present example. Pressure is applied to the outer edge of the nucleic acid binding member 41 by the rings 45 and 46. The nucleic acid binding member 41 is stretched to the outer direction of the radial direction such that the nucleic acid binding member 41 is expanded by pressing pressure from the rings 45 and 46. Thus, the outer edge of the nucleic acid binding member 41 is adhered to the cylindrical inner surface of the holder 44, so that sealability between the holder 44 and the nucleic acid binding member 41 is increased. If the sealability between the holder 44 and the nucleic acid binding member 41 is insufficient, a sample is flown into an insufficiently sealed portion where resistance is small, even when the plunger 20 is operated, so that the sample is not passed through the nucleic acid binding member 41 that has large fluid resistance. In this case, the efficiency of nucleic acid binding is considerably reduced. However, the sample can be certainly flown into the nucleic acid binding member 41 and nucleic acid can be efficiently captured according to the present example.

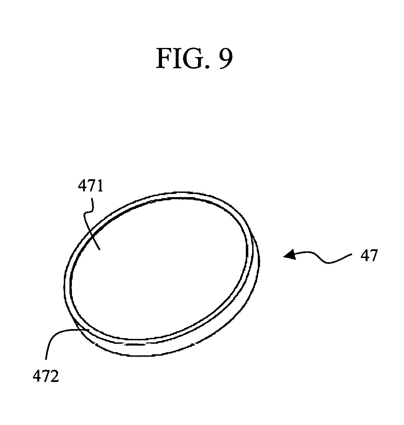

Another example of the holding member is described with reference to Fig. 9. A holding member 47 in the present example is prepared by unifying the holding members 42 and 43 shown in Fig. 8 and the rings 45 and 46. The holding member 47 comprises a disk portion 471 and a ring-shaped protrusion 472. The protrusion 472 is formed along the circumferential outer edge of one of the surfaces of the disk portion 471. Fig. 10B shows a cross-section of the main portions of the nucleic acid binding unit 40 using the holding member 47 of the present example. Pressure is applied to the outer edge of the nucleic acid binding member 41 by the ring-shaped protrusion 472. The nucleic acid binding member 41 is stretched to the outer direction of the radial direction such that the nucleic acid binding member 41 is expanded by pressing pressure from the ring-shaped protrusion 472. Thus, the outer edge of the nucleic acid binding member 41 is adhered to the cylindrical inner surface of the holder 44, so that sealability between the holder 44 and the nucleic acid binding member 41 is increased.

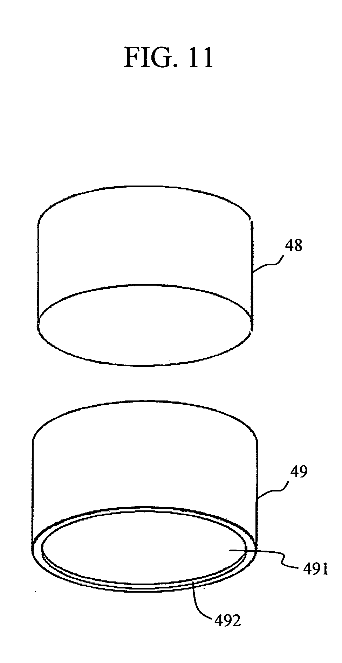

Yet another example of the nucleic acid binding unit 40 is described with reference to Fig. 11. The nucleic acid binding unit 40 of the present example comprises a nucleic acid binding body 48 and a holder 49 for holding the nucleic acid binding body 48. The holder 49 comprises a cylindrical portion 491 and a ring-shaped protrusion 492. The ring-shaped protrusion 492 is formed at the lower end of the cylindrical inner surface of the cylindrical portion 491. The nucleic acid binding body 48 is inserted into the holder 49 until the lower end is abutted on the ring-shaped protrusion 492. The nucleic acid binding unit 40 is thus formed by inserting the nucleic acid binding body 48 into the holder 49.

The nucleic acid binding body 48 of the present example is composed of porous materials that include silica. The nucleic acid binding body 48 is formed by sintering fine particles that include silica. The thickness of the nucleic acid binding body 48 in the axis line direction may be 10 mm, for example.

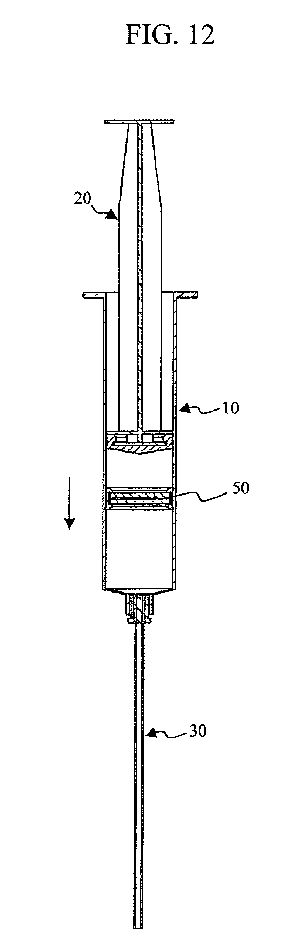

Another example of the syringe is described with reference to Figs. 12, 13, and 14. As shown in Fig. 12, a syringe of the present example comprise the syringe body 10, the plunger 20, the nozzle 30, and a slide-type nucleic acid binding unit 50. The nucleic acid binding unit 50 of the present example is capable of sliding in the syringe body 10 from an upper first location to a lower second location. Fig. 12 shows the nucleic acid binding unit 50 disposed on the first location. When the nucleic acid binding unit 50 is disposed from the first location to the second location, a ring-shaped protrusion may be disposed inside the syringe body 10 so as not to return the nucleic acid binding unit upward. The nucleic acid binding unit 50 of the present example differs from the nucleic acid binding unit 40 shown in Figs. 2 and 3 in the structure of the holder. In this example, the structure of the holder is described.

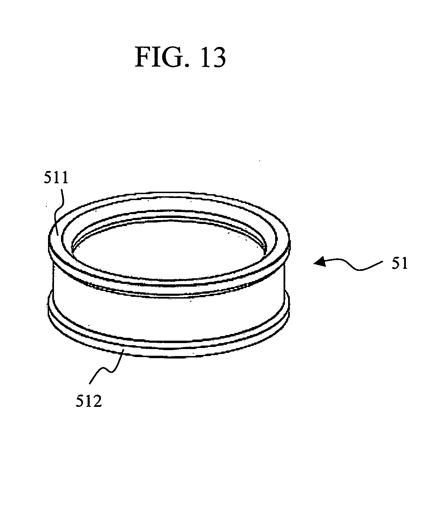

Fig. 13 shows the structure of a holder 51. The holder 51 of the present example differs from the holder 44 shown in Fig. 3 in that circular protrusions 511 and 512 are disposed at the upper end and the lower end of the cylindrical outer surface. A taper or a chamfer may be formed at the lower end of the outer surface of the protrusion 512 on the lower side. The structure of the cylindrical inner surface of the holder 51 is the same as the structure of the cylindrical inner surface of the holder 44 shown in Fig. 3.

The protrusions 511 and 512 function such that the nucleic acid binding unit 50 is capable of sliding inside the syringe body 10, while sealing the inner clearance between the nucleic acid binding unit 50 and the syringe body 10. The protrusions 511 and 512 may be any materials, such as resin, for example, as long as such a function is provided. Although the protrusions 511 and 512 may be formed in a unified manner with the cylindrical body of the holder 51, they may be formed by attaching rings separately formed to the cylindrical body.

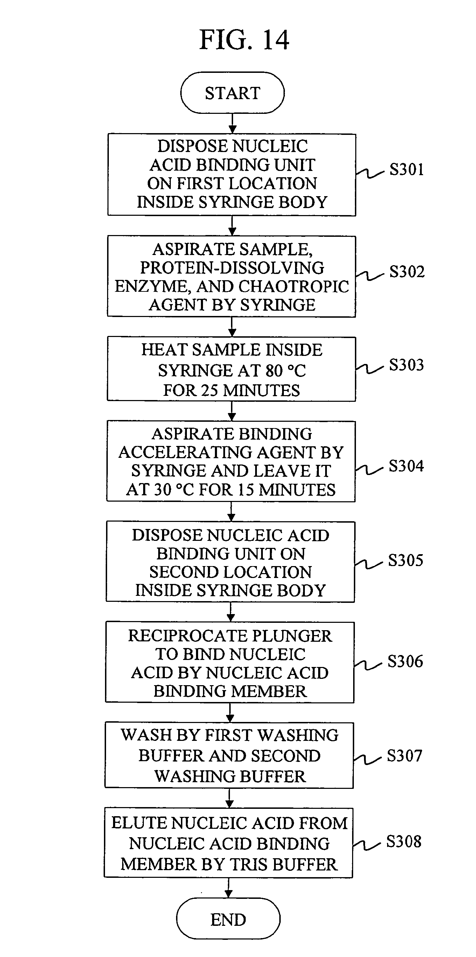

A method of extracting nucleic acid from a sample (sample solution) using the syringe of the present example is described with reference to Fig. 14. The present example differs from the case of Fig. 5 in that the syringe is used instead of a container. However, other features are basically the same as in the case of Fig. 5. A sample, reagent, and washing buffer, for example, used in the present example are the same as in the case of Fig. 5.

In step S301, the nucleic acid binding unit 50 is disposed in the first location inside the syringe body, as shown in Fig. 12. The first location is separate from the lower end of the syringe body by a suitable distance. A space is thus formed in the lower part of the nucleic acid binding unit 50. In step S302, the tip of the nozzle 30 is inserted into a sample stored in a container, and then the plunger 20 is lifted to aspirate the sample into the syringe body. In the same manner, the first reagent and the second reagent are successively introduced into the syringe body. The first reagent is protein-dissolving enzyme and the second reagent is chaotropic agent. Although the reagents are mixed into the sample by the aspiration, the reagents may be mixed into the sample by shaking the syringe. The liquid level of the sample inside the syringe is positioned lower than the nucleic acid binding unit 50, and is not brought into contact. Step S302 corresponds to steps S201 to S202 of Fig. 5.

If insufficiently dissolved sample is brought into contact with the nucleic acid binding member prior to a step for binding nucleic acid, foreign substances other than nucleic acid are adhered to the nucleic acid binding member 41, so that the contact area of nucleic acid is reduced. Thus, the agitation of a sample must be conducted such that the sample is not brought into contact with the nucleic acid binding member 41.

In step S303, the sample inside the syringe is heated. In the present example, the heating is conducted in a state where the sample is held inside the syringe. Step S303 corresponds to step S203 of Fig. 5. In step S304, the tip of the nozzle 30 is inserted into a third reagent stored in a container and the plunger 20 is lifted to aspirate the third reagent into the syringe body. The third reagent is binding accelerating agent. The sample inside the syringe is subjected to cooling down to about 30 °C, and is allowed to stand for about 15 minutes. Step S304 corresponds to step S204 of Fig. 5.

In step S305, the nucleic acid binding unit 50 is moved from the first location to the second location of the syringe body. The second location is the lower end of the syringe body. By pushing the plunger into the syringe body, the nucleic acid binding unit 50 is moved to the second location. In this case, it is necessary to prepare a container for storing a sample in advance, since the sample inside the syringe body is dispensed.

In step S306, nucleic acid is captured. The tip of the nozzle is inserted into the sample in the container and the plunger is lifted to aspirate the sample into the syringe body. The sample is passed through the nucleic acid binding unit 50, and then stored inside the syringe body. Then, the sample is dispensed from the syringe body by pushing into the plunger. This operation is repeated. Consequently, the sample is reciprocated through the nucleic acid binding unit 50, thereby binding nucleic acid by the nucleic acid binding member 41. Step S306 corresponds to step S205 of Fig. 5. In the end, the sample is completely dispensed by sufficiently pushing the plunger 20 into the syringe body 10. In step S307, washing is conducted. Foreign substances are washed out using the first washing buffer and the first washing buffer is washed out using the second washing buffer. Step S307 corresponds to steps S206 and S207 of Fig. 5. In step S308, nucleic acid is eluted from the nucleic acid binding member 41. Step S308 corresponds to step S208 of Fig. 5.

In the present example, the number of containers for use can be reduced and operating efficiency can be improved, since steps from the adjustment of sample to the binding and elution of nucleic acid can be conducted by the syringe.

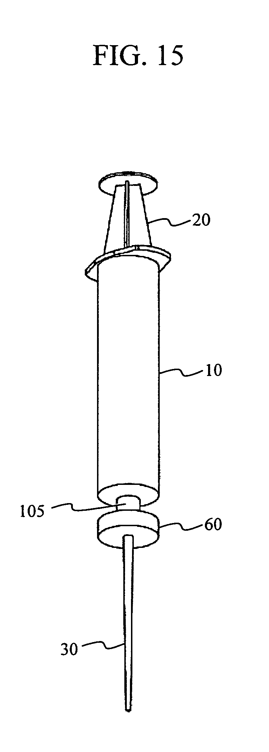

Yet another example of the syringe is described with reference to Fig. 15. A syringe of the present example comprises the syringe body 10, the plunger 20, the nozzle 30, and a nucleic acid binding unit 60. In the present example, the nucleic acid binding unit 60 is attached between the syringe body 10 and the nozzle 30. In other words, a connecting portion (not shown in the figure) for connecting to the connecting portion 105 of the syringe body 10 is disposed at the upper end of the nucleic acid binding unit 60. Also, a connecting portion (not shown in the figure) for connecting to the connecting portion 301 of the nozzle is disposed at the lower end of the nucleic acid binding unit 60. The internal structure of the nucleic acid binding unit 60 may be the same as the nucleic acid binding unit 40 shown in Fig. 2 or Fig. 8, or may be the same as the nucleic acid binding unit 40 shown in Fig. 11.

Generally, if the volume of sample changes, it is necessary to prepare a plurality of capacities of syringes accordingly. However, in the present example, although it is necessary to prepare a plurality of capacities of syringe bodies 10 and plungers 20, it is sufficient to prepare one type of the nucleic acid binding unit 60. It is sufficient to change only the syringe body 10 and the plunger 20 in accordance with the volume of sample. Generally, if the types of sample change, it is necessary to prepare a plurality of types of syringes accordingly. However, in the present example, although it is necessary to prepare a plurality of nucleic acid binding units 60, it is sufficient to prepare one type of the syringe body 10 and the plunger 20. It is sufficient to change only the nucleic acid binding units 60 in accordance with the type of the sample.

Although the examples of the present invention are described, the present invention is not limited to the aforementioned examples. It must be noted that a person skilled in the art is capable of various modification concerning the range of the invention described in claims.

Also, some of the technologies disclosed in the present example can be applied to such an apparatus for refining nucleic acid as disclosed in Patent Application No. 10-70201 (1998). The apparatus for refining nucleic acid comprises a tip for binding nucleic acid that incorporates silica-included solid substance so as to be capable of contacting liquid, a movable nozzle for liquid aspiration/dispense that connects the tip for binding nucleic acid in a removable manner, a processing container capable of storing mixed solution of a substance that accelerates the binding of nucleic acid to solid substance and a sample that includes nucleic acid, means for supplying washing buffer to the processing container, means for supplying elution buffer to the processing container, a container for refined substance that accepts refined substance of nucleic acid, transfer means for allowing the tip for binding nucleic acid in an unused state to be connected to the movable nozzle for liquid aspiration/dispense and allowing the tip for binding nucleic acid in a connected state to be transferred to the locations of the processing container and the container for refined substance, means for a liquid aspiration/dispense process that allows the tip for binding nucleic acid connected to the movable nozzle for liquid aspiration/dispense to aspirate/dispense the mixed solution, then to aspirate/dispense the washing buffer, and then to aspirate/dispense the elution buffer, and means for tip removal that removes the tip for binding nucleic acid from the movable nozzle for liquid aspiration/dispense, after the elution buffer is discharged into the container for refined substance from the tip for binding nucleic acid. In this case, the tip for binding nucleic acid is a cylindrical member comprising transparent or translucent synthetic resin. The tip for binding nucleic acid has such an inside diameter that a head portion is fitted into the tip of the movable nozzle in an airtight manner and is formed such that the inside diameter of the lower portion gradually becomes small toward the tip.

Further, some of the technologies disclosed in the present example can be applied to such an portable-type apparatus for refining nucleic acid as disclosed in Patent Application No. 2003-139542. The portable-type apparatus for refining nucleic acid is provided with a tip for binding nucleic acid and a syringe unit. In this case, the syringe unit comprises a connecting portion for connecting the tip for binding nucleic acid, a body portion that also functions as a grip portion, and an operating portion disposed on the opposite side of the connecting portion via the body portion.

## Claims

1. A syringe comprising:
a cylindrical syringe body;
a plunger that is capable of sliding inside said syringe body;
a nozzle connected to the bottom portion of said syringe body; and
a meshed solid substance that includes silica disposed inside said syringe body.

2. An apparatus for isolating nucleic acid comprising:
a syringe body provided with a nozzle;
a plunger that slides inside said syringe body; and
a meshed solid substance for binding nucleic acid disposed inside said syringe body.

3. The apparatus for isolating nucleic acid according to claim 2, wherein
said meshed solid substance for binding nucleic acid comprises an aggregate of a plurality of particles that include silica.

4. The apparatus for isolating nucleic acid according to claim 2, comprising:
a holder for holding said meshed solid substance for binding nucleic acid, said holder being disposed inside said syringe body.

5. The apparatus for isolating nucleic acid according to claim 4, wherein
said holder is provided with a holding member for sandwiching both surfaces of said meshed solid substance for binding nucleic acid.

6. The apparatus for isolating nucleic acid according to claim 2, comprising:
a holding member for sandwiching said meshed solid substance for binding nucleic acid.

7. A method for manufacturing an apparatus for isolating nucleic acid, comprising:
preparing a syringe body provided with a nozzle, a plunger capable of sliding inside said syringe body, a meshed solid substance for binding nucleic acid, and a holder capable of being disposed inside said syringe body;
holding said meshed solid substance for binding nucleic acid in said holder;
disposing said holder that holds said meshed solid substance for binding nucleic acid inside said syringe; and
inserting said plunger into said syringe.

8. The method for manufacturing an apparatus for isolating nucleic acid according to claim 7, comprising:
cutting meshed fibers that include silica, wherein a plurality of fibers that include silica are adhered to one another, and preparing said meshed solid substance for binding nucleic acid.

9. The method for manufacturing an apparatus for isolating nucleic acid according to claim 7, comprising:
preparing a holding member capable of sandwiching said meshed solid substance for binding nucleic acid; and
holding said meshed solid substance for binding nucleic acid in said holder in a state where said meshed solid substance for binding nucleic acid is sandwiched by said holding member.

10. A holder wherein a meshed solid substance for binding nucleic acid is held, said holder being capable of being disposed inside a syringe body provided with a nozzle.

11. The apparatus or holder according to claim 2 or 10, wherein
said meshed solid substance for binding nucleic acid comprises meshed fibers that include silica, wherein a plurality of fibers that include silica are adhered to one another.

12. The apparatus or holder according to claim 2 or 10, wherein
the aspect ratio of said meshed solid substance for binding nucleic acid is not more than 1.

13. The apparatus or holder according to claim 2 or 10, wherein
the average pore size of said meshed solid substance for binding nucleic acid is 0.2 to 30 µm.

14. The holder according to claim 10, wherein
a holding member for sandwiching said meshed solid substance for binding nucleic acid is provided.

15. The apparatus or holder according to claim 6 or 14, wherein
said holding member is mesh-shaped, wherein the average pore size is larger than that of said meshed solid substance for binding nucleic acid.

16. The apparatus or holder according to claim 6 or 14, wherein
the circumferential portion of said meshed solid substance for binding nucleic acid is directly or indirectly compressed by said holding member.

17. The apparatus or holder according to claim 6 or 14, wherein
said holding member is provided with a protruding portion whose shape is substantially the same as the circumferential portion of said meshed solid substance for binding nucleic acid.

18. The apparatus or holder according to claim 6 or 14, wherein
a ring is inserted between said meshed solid substance for binding nucleic acid and said holding member, said ring having substantially the same shape as the circumferential portion of said meshed solid substance for binding nucleic acid.

19. An apparatus for isolating nucleic acid comprising:
a syringe body provided with a nozzle;
a plunger that is capable of sliding inside said syringe body; and
a meshed solid substance for binding nucleic acid that is capable of sliding inside said syringe body.

20. The apparatus for isolating nucleic acid according to claim 19, comprising:
a holder disposed in a slidable manner inside said syringe body, wherein a meshed solid substance for binding nucleic acid is held.

21. An apparatus for isolating nucleic acid comprising:
a syringe body;
a plunger that slides inside said syringe body;
a nozzle; and
a container for isolating nucleic acid that connects to said syringe body and said nozzle, wherein a meshed solid substance for binding nucleic acid is provided therein.
